# EUROPEAN PATENT APPLICATION

(11) **EP 4 847 283 A1**
(43) Date of publication of application: **02.12.2026**
(21) Application number: 26175599.5
(22) Date of filing: 30.04.2026
(51) Int. Cl.: B60H 1/22, B60H 1/00

(54) **PTC HEATING ELEMENT**

(30) Priority: 29.05.2025 GB 202508365
(71) Applicant: AGCO International GmbH, 8212 Neuhausen am Rheinfall (CH)
(72) Inventor: Weller, Jakob, 87616 Marktoberdorf (DE); Noess, Christian, 87616 Marktoberdorf (DE)
(74) Representative: AGCO Intellectual Property Department

(57) **Abstract**

A heating arrangement for an electric agricultural machine (100) controls power consumption based on demand for heating. The arrangement includes a heating device (316) with switchable electric heating elements (406a) to (406c), a control unit (114), and a controllable electric consumer. The control unit (114) detects a heating demand, adjusts the power consumption of the electric consumer based on the switch-on current of the heating elements (406a - 406c), and switches (408a) to (408c) on the electric heating elements.

## Description

### FIELD

The present disclosure relates generally to a heating arrangement for an electric agricultural machine.

### BACKGROUND

A driver of a vehicle may increase a temperature of an inside air in a passenger compartment to a comfortable level by means of a heating arrangement. In case of an electric vehicle, an electric heating element such as a positive temperature coefficient (PTC) heating element, also called PTC resistance, may be used as electrical heater in the heating arrangement to heat up the inside air. Such kind of electric heating element is made of a special ceramic material having a variable resistance increasing with rising temperature. When the PTC heating element is switched on, the initial resistance of the material may be low. Hence, a very high electrical current (switch-on current) may flow during the switch-on phase of the PTC heating element leading to a rapid heating of the PTC heating element (initial heating). As the temperature increases, the PTC material reaches a specific temperature known as the Curie temperature. At this point, the resistance of the material increases significantly (resistance transition). Due to the increased resistance, the current flow through the PTC heating element gets more restricted. This results in a stable temperature, as the PTC heating element regulates its own temperature without the need for any external controls (self-regulation). The PTC heating element reaches a temperature where the generated heat equals the emitted heat. In this state, the current consumption remains consistently low, which enhances energy efficiency and minimizes the risk of overheating (stable temperature). This self-regulating property makes PTC heating elements particularly safe and efficient for various applications.

For example, patent DD 289 633 A5, entitled "Selbstregelnde elektrische Heizeinrichtung", published on 02 May 1991, discloses a heating arrangement with PTC heating elements having self-regulating properties.

### BRIEF SUMMARY

High switch-on currents of an electric heating element may overload the power supply of an electric vehicle. Thus, it would be beneficial to provide an improved heating arrangement enabling a stable operation of the electric vehicle also during the switch on phase of the electric heating element.

According to an aspect of the invention there is provided a heating arrangement for an electric agricultural machine. The electric agricultural machine may be an agricultural vehicle such as a tractor, a harvester, a combine, a sprayer, etc., optionally connected with an implement. The heating arrangement comprises a heating device, a control unit and a controllable electric consumer. The heating device comprises at least one switchable electric heating element. The control unit is configured to detect a heating demand, to determine a switch-on current of the at least one switchable electric heating element, to adjust a power consumption of the controllable electric consumer in dependence of the switch-on current and to switch on the at least one switchable electric heating element.

The heating arrangement may be used for warming an inside temperature of the agricultural machine, e. g. in a cabin. When switched on, the at least one electric heating element may generate heat to warm air in the agricultural machine. The heating demand may be triggered for instance by a manual or automatic control of a HVAC-system. The control unit may determine the switch-on current based on a look-up table, prestored statistical values (regression), any functions for estimation optionally assisted by AI, or even measuring. The controllable electric consumer may be any electric component of the agricultural machine whose power consumption can be adjusted by the control unit. For example, the control unit may reduce the power consumption of the controllable electric consumer by an amount corresponding to the maximum switch-on current of the at least one electric heating element before the at least one electric heating element is switched on to avoid excess current which may damage any electric component (e. g. battery) of the agricultural machine.

The control unit may be configured to reduce the power consumption of the controllable electric consumer in dependence of an increase of the switch-on current.

For example, the control unit may reduce the power consumption simultaneously to the increase of the switch-on current. Hence, the switch-on current of the at least one heating element may be compensated by the controllable electric consumer such that any time delay between the reduction of the power consumption and the increase of the switch-on current can be minimized.

The control unit may be configured to increase the power consumption of the controllable electric consumer in dependence of a decrease of the switch-on current.

When the electric current of the at least one heating element may be reduced for example due to a resistance transition, the control unit may adjust the power consumption of the controllable electric consumer accordingly so that the controllable electric consumer may operate with improved performance again.

The control unit may be configured to adjust the current provided for the controllable electric consumer in order to adjust the power consumption of the controllable electric consumer.

For example, the control unit may adjust the current of the controllable electric consumer contrary to the adjustment of the switch-on current of the at least one heating element. I. e., the control unit may reduce the current provided for the controllable electric consumer by the same amount as the current of the at least one electric heating element increases, and vice versa. I. e., a reciprocal adjustment of the electric currents of the controllable electric consumer and the at least one electric heating element can be achieved.

The controllable electric consumer may be an electric motor.

An electric motor may be an electric component having an appropriate performance to compensate the switch-on current of the at least one heating element in regards to dynamics and peaks. I. e., the current for the electric motor may be reduced as fast and as low as the switch-on current of the at least one heating element increases. Accordingly, any time delay between the reduction of the power consumption and the increase of the switch-on current may be minimized.

The at least one switchable electric heating element may be at least one positive temperature coefficient (PTC) resistance.

PTC resistances are considered to be particularly safe and efficient. Since no complex control strategy is needed, controllability of such kind of heating elements is also easy. Hence, PTC resistances are a good option to be used as electric heating elements although other types of heating elements may also be possible.

The heating device may comprise at least one switch. The at least one electric heating element may be connected with the at least one switch.

The at least one switch may provide the ability of the at least one switchable electric heating element to be switched on or off. The at least one switch may be controlled by the control unit. When switched on, the at least one electric heating element converts electric energy into heat. When switched off, the conversion of electric energy into heat by the at least one electric heating element is interrupted. If the heating device comprises multiple (more than one) electric heating elements, the electric heating elements may be connected with a common switch, or each electric heating element may be connected with a separate switch. So, in case of multiple electric heating elements, the electric heating elements may be switched simultaneously.

The heating arrangement may comprise a sensor for measuring a current parameter of an electric current provided for the at least one switchable heating element. The control unit may be configured to determine a switch-on current of the at least one switchable electric heating element on the current parameter.

The control unit may be connected with the sensor for receiving the current parameter. The current parameter may be at least one out of the following parameters: time since last switch-on, switched-on time, outside temperature, fan speed of HVAC, etc. Based on the current parameter, the control unit may calculate the switch-on current and its change over time. Thus, the control unit may control the electric current of the controllable electric consumer more precisely compared to an estimation of the switch-on current of the electric heating element for an improved compensation of the increase of the switch-on current.

The heating device may comprise at least two switchable electric heating elements. The heating power of one of the at least two switchable electric heating elements may be different to the heating power of another of the at least two switchable electric heating elements.

For example, the heating power of a first electric heating element may be 1 kW and the heating power of a second electric heating element may be 2 kW. Depending on whether the first, the second or both electric heating elements are switched on, the heating device may provide a different overall heating power which is the sum of the heating power of the first and the second electric heating elements. The overall heating power of the heating device can be incrementally adjusted in 1 kW steps to three different heating power levels of 1 kW, 2 kW and 3 kW. I. e., due to the combination of two switchable electric heating elements having different heating power, more than two heating power levels (in this example three) can be provided. So, a third electric heating element providing a heating power of 3 kW can be omitted. Accordingly, the number of electric heating elements and switches can be minimized.

The at least two switchable electric heating elements may be arranged in parallel.

Due to a parallel arrangement, each electric heating element can be individually switched on or off by the control unit, for example to incrementally adjust the overall heating power of the heating device as explained before.

The control unit may be configured to sequentially switch on the at least two switchable electric heating elements.

Instead of switching on the at least two electric heating elements simultaneously at the same time, the control unit may switch on the second electric heating element with a short delay after the first electric heating element has been switched on so that the first and the second electric heating elements are switched on at different times. For example, the control unit may switch on the second electric heating element when the switch-on current of the first electric heating element starts to reduce (e. g. when the resistance transition has been reached). Hence, a cumulation of the peaks of the switch-on currents of the first and second electric heating elements may be avoided. I. e, the sum of the switch-on currents of the first and second electric heating elements may be lower compared to the sum of the peaks of the switch-on currents of the first and second electric heating elements. Accordingly, the control unit may reduce the current of the controllable electric consumer less since a lower reduction of the current would be sufficient to compensate the sum of the switch-on currents of the first and second electric heating elements.

The control unit may be configured to determine the switch-on current of the at least two switchable electric heating elements as an accumulated switch-on current of the at least two switchable electric heating elements.

Hence, the control unit may determine the sum of the switch-on currents if two (or more) heating elements are switched on. The sum may correspond to the overall heating power of the heating device. The control unit may adjust the power consumption of the controllable electric consumer based on the accumulated switch-on current of the at least two switchable electric heating elements.

The heating arrangement may comprise a temperature sensor for determining a current temperature. The control unit may be configured to determine a target temperature, and detect a heating demand if the current temperature deviates from the target temperature.

The temperature sensor may be arranged in the cabin of the agricultural machine to determine the temperature of an inside air as current temperature. Target temperature may be demanded by the operator of the agricultural machine. For example, the operator may manually control the HVAC-system to set the target temperature value according to his need. The control unit may receive the target temperature and compare it with the current temperature. In case of a deviation of the current temperature from the target temperature, the control unit controls the at least one switch of the heating device to switch the at least one electric heating element on or off. Hence, an automatic temperature control can be achieved to keep the temperature of the inside air according to the target temperature.

Another aspect includes a method of controlling a heating arrangement. The method comprises method steps for detecting a heating demand, determining a switch-on current of at least one switchable electric heating element, adjusting a power consumption of the controllable electric consumer in dependence of the switch-on current, switching on the at least one switchable electric heating element.

The method may be executed by the control unit to compensate the switch-on current of the at least one heating element by the controllable electric consumer. As disclosed above, the control unit is configured to execute different actions. Each action may be implemented as one or more method steps of the method executable by the control unit. Hence, each action for which the control unit is configured to execute may be defined as a method step.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates an agricultural machine.
FIG. 2 illustrates a simplified view of a control unit.
FIG. 3 illustrates a schematic block diagram of the agricultural machine.
FIG. 4 illustrates a schematic of a heating device.
FIG. 5A illustrates characteristics of switch-on currents over time of different heating elements.
FIG. 5B illustrates characteristics of switch-on currents over time of different heating elements.
FIG. 6 illustrates a flow chart of a method executable by the control unit of FIG. 2.

### DETAILED DESCRIPTION

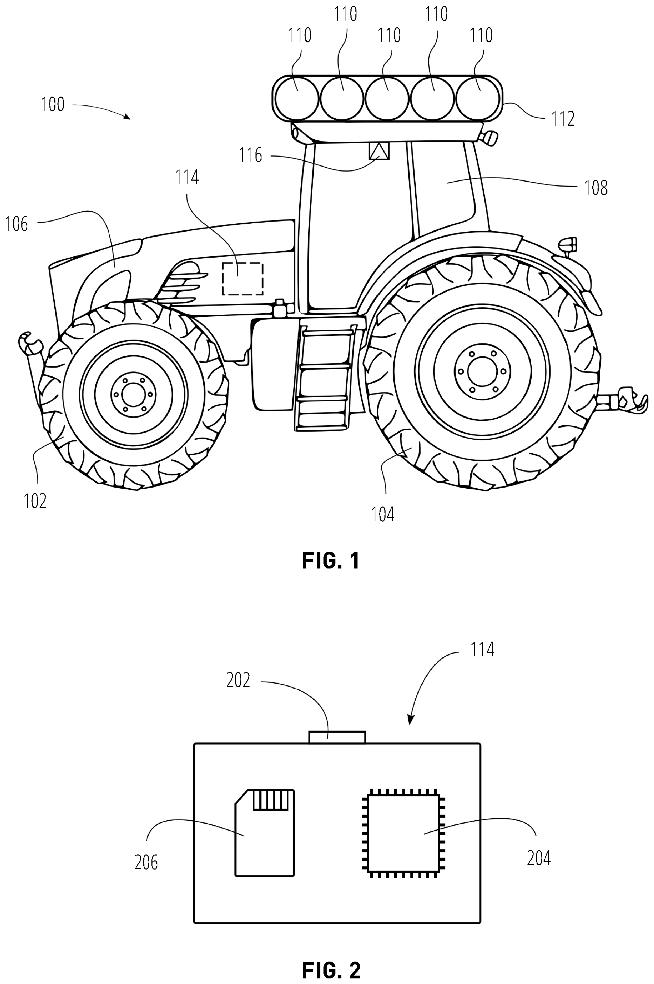

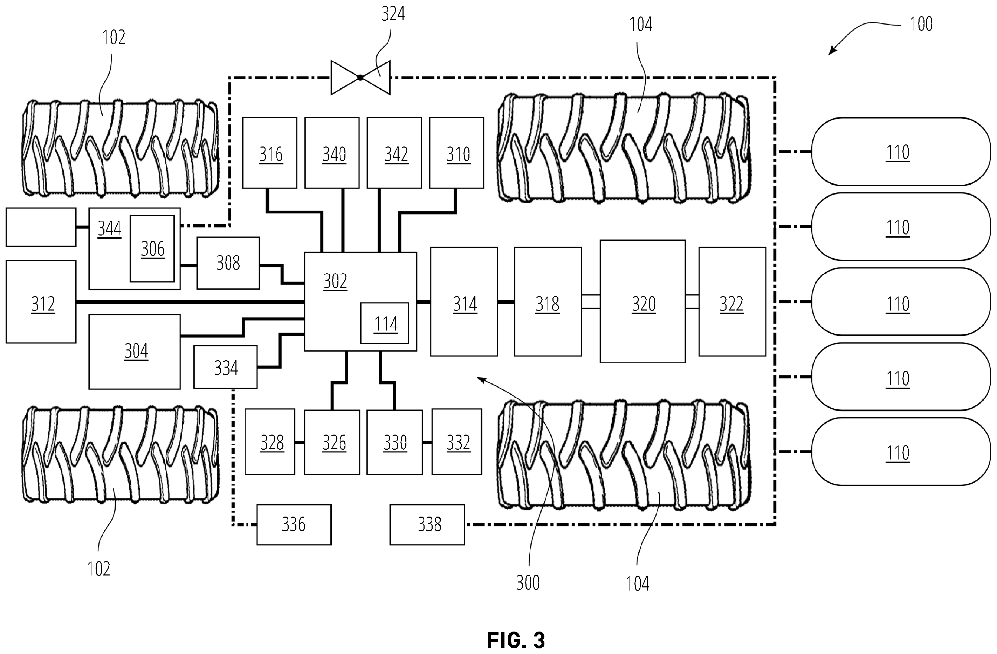

FIG. 1 shows an electrically powered agricultural machine 100 comprising front wheels 102 and rear wheels 104. An electric motor 318 (see FIG. 3) installed in the electric agricultural machine 100 may generate a tractive force to propel the front and/or rear wheels 102, 104. The agricultural machine 100 may be a vehicle or a vehicle-implement combination. The implement may be fixed to the vehicle or detachably connected with the vehicle. The vehicle may be an agricultural vehicle such as a tractor, a harvester, a combine, a sprayer or of any other type such as a truck. The implement may be used for an operation in an agricultural field and may be of the type of a plough, a rake, a planter, a sprayer, a mower, a trailer, etc. Depending on the type of the implement, the implement may comprise one or more tools such as a rake rotor, a mower knife, a seeding unit, a spray nozzle, a shovel, a dumper, etc.

The electric agricultural machine 100 is exemplarily shown as a fuel cell vehicle having an electric energy source 344 with a fuel cell 306 (see FIG. 3). Alternatively, the agricultural machine 100 may be a battery electric vehicle (BEV) having a battery as an electric energy source or may be of any other type including hybrid electric vehicles (HEV) having an electric energy source with a generator, a capacitor or any other component for providing electric energy. The fuel cell 306 can be supplied with fuel such as hydrogen or methane stored in tanks 110. The agricultural machine 100 may comprise five tanks, for example. The tanks 110 are arranged in an enclosure 112 attached on top of a cabin 108 of the agricultural machine 100. An operator may sit in the cabin 108 of agricultural machine 100 and manually control the agricultural machine 100.

The agricultural machine 100 comprises also a control unit 114. The control unit 114 as shown in FIG. 2 in more detail may be installed anywhere in the agricultural machine 100, for example under the hood 106. Further, a temperature sensor 116 is arranged in the cabin 108 to determine a temperature of the inside air in the cabin 108.

FIG. 2 shows the control unit 114 comprising an I/O interface 202, a controller 204 and a memory 206. The I/O interface 202, the controller 204 and the memory 206 may be attached to a printed circuit board (PCB). The control unit 114 may receive and send signals or data via the I/O interface 202. The I/O interface 202 may be a wireless interface or a connector. The controller 204 may optionally represent a combination of two or more networked controllers. The controller 204 may store the data or signals received by the control unit 114 in the memory 206. The memory 206 may contain additional data or executable computer program products, for example in terms of a computer-implemented method, that may be retrieved, processed or executed by the controller 204. Data or signals resulting from the processing of data or signals or from the execution of a computer program product may be stored to the memory 206 or sent to the I/O interface 202 by the controller 204. Regardless of FIG. 2 exemplarily illustrating the control unit 114 as a standalone control unit, the control unit 114 may represent a network of multiple control units distributed within the system.

FIG. 3 shows a simplified block diagram of the electric agricultural machine 100 shown in FIG. 1. Additionally to the components shown in FIG. 1, the agricultural machine 100 comprises several components that are electrically connected with each other such as a power distribution unit 302 (PDU), an inverter 314, the electric motor 318, an electric energy storage 304 (e. g. a battery) configured to provide electric energy to the electric motor 318, the electric energy source 344 comprising the fuel cell 306 and configured to provide electric energy to the electric motor 318, a DC/DC converter 308 arranged between the electric energy source 344 and the power distribution unit 302, a DC/DC converter 326 connected with a first on-board power supply 328, another DC/DC converter 330 connected with a second on-board power supply 332, an on-board charging device 334 and several controllable electric consumers such as a heating device 316, an AC compressor 340, an air compressor 342, an electric consumer 310 and an electric consumer 312.

The inverter 314 is electrically connected with the electric motor 318 and controls the modes of operation of the electric motor 318. When the electric motor 318 is operated in a motor mode, the electric motor 318 converts electric energy into mechanical energy for providing a torque to drive a transmission 320 mechanically coupled to the electric motor 318. The transmission 320 may be an automatic gearbox such as a continuous variable transmission (CVT). From the transmission 320, the torque is transferred to the front and/or rear wheels 102, 104 to drive the agricultural machine 100. When the electric motor 318 is operated in a generator mode, the electric motor 318 converts a torque transferred from the transmission 320 into electric energy. The electric motor 318 may be operated in generator mode for recuperative braking of the agricultural machine 100. The electric energy generated by the electric motor 318 operated in generator mode may be used to supply any electric component of the agricultural machine 100 and/or to charge the electric energy storage 304. Hence, the electric motor 318 may be used as an electric energy source when operated in generator mode and may be used as a controllable electric consumer when operated in motor mode.

A retarder 322 is mechanically coupled to the electric motor 318 via the transmission 320 for decelerating the agricultural machine 100 by providing a brake torque for braking the wheels. The brake torque induced by the retarder 322 has effect on the electric motor 318 to consume electric energy.

The electric energy source 344 with the fuel cell 306 and the electric motor 318 are covered by the hood 106 of the agricultural machine 100. The tanks 110 are fluidly connected with the fuel cell 306 and a refilling receptacle 338 by means of a hydraulic line. Via the refilling receptacles 338, the tanks 110 can be refilled with fuel at a gas station. From the tanks 110, the fuel can be delivered via the hydraulic line to the fuel cell 306. A pressure reduction valve 324 arranged in the hydraulic line between the fuel cell 306 and the tanks 110 can be used to adjust the pressure level of the fuel delivered to the fuel cell 306. For example, a pressure of 700 bar within the tanks 110 may be reduced to 12 bar when hydrogen is provided to the fuel cell 306. The fuel cell 306 can convert the chemical energy of the fuel into electric energy to supply any electric component of the agricultural machine 100 and/or to charge the electric energy storage 304. Hence, the fuel cell 306 can generate electric energy for the electric motor 318 to provide the tractive force. The DC/DC converter 308 arranged between the fuel cell 306 and the power distribution unit 302 converts the voltage of the electric current provided by the fuel cell 306 to a voltage value of the electric energy storage 304, as for example any value between 550 V to 750 V. The fuel cell 306 may be a proton exchange membrane (PEM) fuel cell.

The additional DC/DC converters 326 and 332 connected with the power distribution unit 302 may provide different voltage values for the first on-board power supply 328 and the second on-board power supply 332. For example, the first on-board power supply 328 may provide 12 V and the second on-board power supply 332 may provide 24 V. Additionally, a charging receptacle 336 is connected via a 3-phase on-board charging device 334 (OBC) with the power distribution unit 302. The charging receptacle 336 may be connected with an external electric energy source, e. g. a wallbox, to supply the power distribution unit 302 with electric energy and to charge the electric energy storage 304.

The electric consumer 310 is for example a brake resistor to consume excessive electric energy generated by the electric motor 318 operated in generator mode that cannot be saved by the electric energy storage 304. The electric consumer 310 may protect the power management system 300 from damage in error cases, for example in a load drop scenario.

The electric consumer 312 is for example a fan for cooling electric components of the agricultural machine 100 and protect them against overheating.

The control unit 114 is exemplarily integrated in the power distribution unit 302 but other locations are also possible. The control unit 114 can send and/or receive electrical signals via the I/O interface 202 to/from the components of the agricultural machine 100. The control unit 114 is connected with the temperature sensor 116 to receive temperature signals from the temperature sensor 116 and connected with the inverter 314 to control the electric motor 318. The control unit 114 is also connected with the heating device 316 to control the same.

The heating device 316, the control unit 114 and at least one of the controllable electric consumers form a heating arrangement. The at least one controllable electric consumer may be selected out of the controllable electric consumers mentioned above. For sake of simplicity, the at least one controllable electric consumer is represented by the electric motor 318 in the following description. Further, the heating arrangement may also comprise the AC compressor 340 as part of a heating, ventilation and air conditioning HVAC-system used for climatization of the cabin 108 of the agricultural machine 100. The operator may manually control the HVAC-system to define a target temperature he feels comfortable with. The HVAC-system provides an automatic temperature control for automatically heating of the inside air in the cabin 108 to keep the current temperature of the inside air measured by the temperature sensor 116 in accordance with the target temperature.

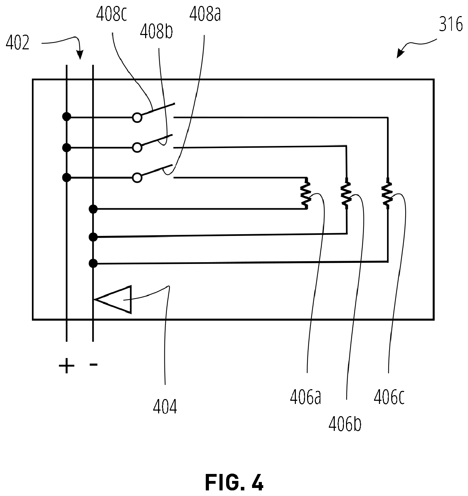

FIG. 4 shows the heating device 316 in more detail. The heating device 316 comprises electric heating elements 406a to 406c and switches 408a to 408c for separately switching the electric heating elements 406a to 408c. Each electric heating element 406a to 406c is connected with power lines 402 to be fed with electric power provided by the power distribution unit 302. The electric heating elements 406a to 406c may be designed each as a positive temperature coefficient (PTC) resistance, for example. The electric heating elements 406a to 406c are arranged in parallel to each other. Analogously, the switches 408a to 408c are connected with the power lines 402 and arranged in parallel to each other. The switches 408a to 408c are integrated between a corresponding electric heating element 406a to 406c and the power lines 402. I. e., each switch 408a to 408c is assigned to a corresponding electric heating element 406a to 406c and is configured to interrupt or reconnect the connection of the corresponding electric heating element 406a to 406c with the power lines 402. The control unit 114 is connected with each switch 408a to 408c to individually switch them on or off independently from each other. Hence, power supply of each electric heating element 406a to 406c can be individually controlled by the control unit 114.

Each electric heating element 406a to 406c has a different heating power. For example, electric heating element 406a has a heating power of 1 kW, electric heating element 406b of 2 kW and electric heating element 406c of 4 kW. The control unit 114 controls opening or closing of the switches 408a to 408c to adjust an overall heating power of the heating device 316. The overall heating power of the heating device 316 may be demanded by the operator by adjusting the target temperature or automatically by the control unit 114. For example, if an overall heating power of 2 kW is demanded, the control unit 114 closes switch 408b and opens switches 408a and 408c to provide electric heating element 406b with electric power. The control unit 114 may additionally close switch 408c if an overall heating power of 6 kW is demanded. Analogously, the control unit 114 may control the heating device 316 to provide an overall heating power of 0 kW, 1 kW, 2 kW, 3 kW, 4 kW, 5 kW, 6 kW or 7 kW. Hence, seven different heating power levels may be achieved by the usage of only three electric heating elements due to the specific increment of the heating powers of the heating elements.

As can also be seen in FIG. 4, a sensor 404 is integrated in the heating device 316 to determine the electric current flowing through the power lines 402 and demanded by the electric heating elements 406a to 406c. A corresponding sensor signal is generated by the sensor 404 and transferred to the control unit 114.

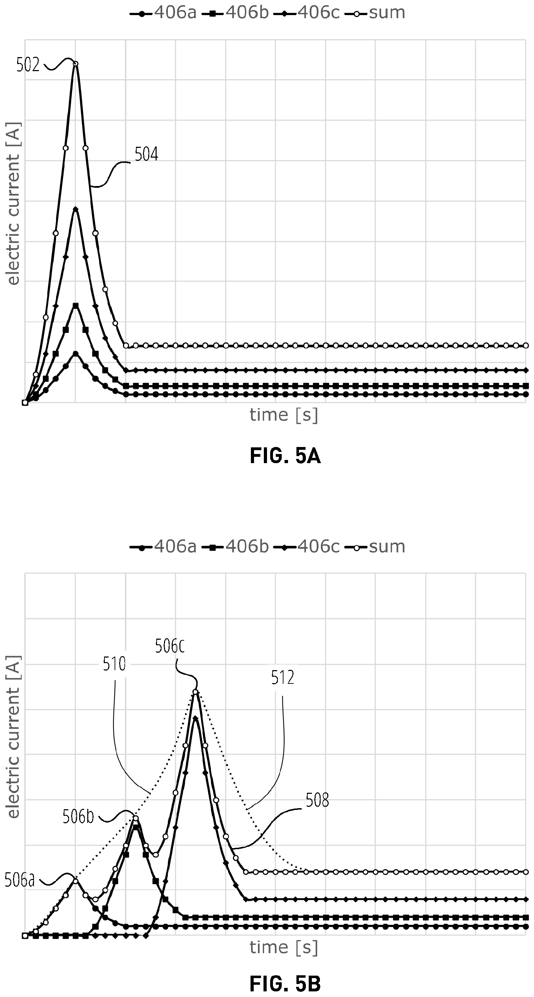

FIG. 5A shows the characteristic of the switch-on current over time for each electric heating element 406a to 406c and a characteristic "sum" 504 representing an accumulation of all switch-on currents when all electric heating elements 406a to 406c are switched on by the control unit 114 at the same time. The current flowing through the power lines 402 depends on the heating elements that have been switched on. Accordingly, the sensor 404 measures a current flowing through the power lines 402 that corresponds to the accumulation of the switch-on currents of the switched-on electric heating elements.

The characteristic of the switch-on current of each electric heating element 406a to 406c depends on the type of the corresponding electric heating element 406a to 406c. The characteristics exemplarily shown in FIG. 5A may be typically for PTC resistances having a rapid increase of their switch-on current up to a peak. In case of other electric heating elements, the characteristics may differ. Due to the rapid increase of the switch-on current, the heating element heats up very quickly. The increased temperature also increases the internal resistance of the heating element so that the electric current flowing through the heating element will be restricted more and more until a stable heating temperature of the corresponding electric heating element 406a to 406c has been reached. Accordingly, the switch-on current decreases during a phase of a resistance transition from the peak to a constant value that corresponds with the heating power of the corresponding electric heating element 406a to 406c. As exemplarily shown in FIG. 5A, the constant current value of the electric heating element 406a may be required for its heating power of 1 kW, the constant current value of the electric heating element 406b may be required for its heating power of 2 kW and the constant current value of the electric heating element 406c may be required for its heating power of 4 kW. Accordingly, the constant current value of the characteristic "sum" 504 represents an accumulation of the constant current values of the electric heating elements 406a to 406c which may be required for an overall heating power of 7 kW when all electric heating elements 406a to 406c have been switched on by the control unit 114.

Instead of switching on the electric heating elements 406a to 406c at the same time, the control unit 114 may switch on at least two of the electric heating elements 406a to 406c consecutively or sequentially. As exemplarily shown in FIG. 5B, the control unit 114 may delay the switching on of the electric heating element 406b after the electric heating element 406a has been switched on. Analogously, the control unit 114 may delay the switching on of the electric heating element 406c after the electric heating element 406b has been switched on. The delay can be controlled by the control unit 114. For example, the control unit 114 may delay the switching on of a subsequent electric heating element until the switch-on current of the previous electric heating element 406c starts to reduce. So, in FIG. 5B, the characteristic "sum" 508 representing an accumulation of all switch-on currents of all switched on electric heating elements 406a to 406c generates three delayed peaks 506a, 506b and 506c instead of one peak 502 according to the characteristic "sum" 504 as shown in FIG. 5A.

As a consequence of the sequentially switching on, the characteristic "sum" 508 caused by a sequentially switching on of the electric heating elements 406a to 406c (as shown in FIG. 5B) may reach the constant current value a little bit later compared to the characteristic "sum" 504 caused by a simultaneous switching on (as shown in FIG. 5A) resulting in little bit delayed reaching of the stable heating temperature of the heating device 316. But due to the sequentially switching on of the electric heating elements 406a to 406c, the value of the maximum peak of the characteristic "sum" 508 represented by peak 506c as shown in FIG. 5B can be reduced to a much lower value compared to the maximum peak 502 of the characteristic "sum" 504 for simultaneous switching on (as shown in FIG. 5A). For example, the value of peak 506c may be lower than 66% of the value of peak 502 so that the maximum current could be reduced by about one third.

When the phase of stable temperature of the heating device 316 has been reached after sequentially switching on of the electric heating elements 406a to 406c, the constant current value of the characteristic "sum" 508 will represent an accumulation of the constant current values of the electric heating elements 406a to 406c (1 kW, 2 kW and 4 kW) which may be required for an overall heating power of 7 kW analogously to the switching on of the electric heating elements 406a to 406c at the same time (see FIG. 5A and FIG. 5B).

The characteristic of the switch-on current of each electric heating element 406a to 406c may be stored in the memory 206 of the control unit 114. Hence, the control unit 114 has for each electric heating element 406a to 406c information about the peak value of the switch-on current, the time period until the peak has been reached after the control unit 114 has switched on the corresponding electric heating element, the constant value of the electric current according to the stable temperature of the heating arrangement as well as the time period until the constant value of the electric current has been reached after the switching on. Accordingly, the control unit 114 can determine the electric current required by the heating device 316 over time as the sum of the switch-on currents over time of the switched on electric heating elements regardless whether the electric heating elements 406a to 406c are switched on simultaneously as shown in FIG. 5A or sequentially as shown in FIG. 5B.

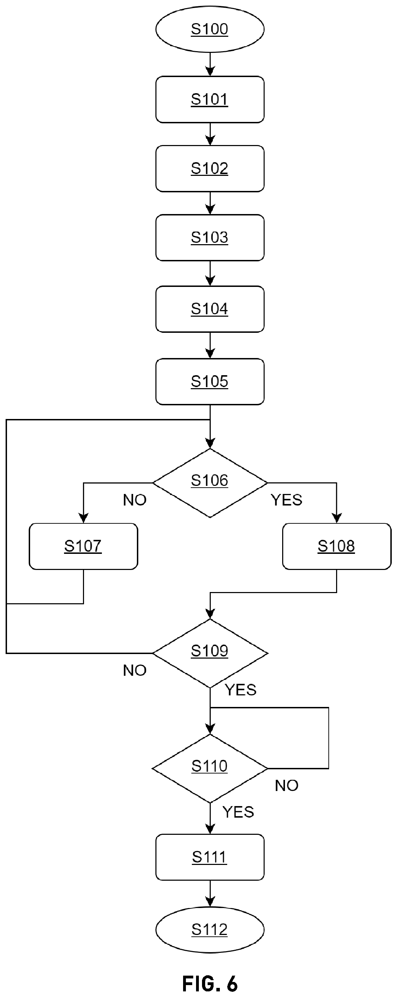

FIG. 6 shows a flow chart of a method for controlling the heating arrangement. The method may be at least partly a computer-implemented method stored as a computer program product in the memory 206 of the control unit 114. The control unit 114 is configured to carry out the method. Computer-implemented parts of the method may be executed by the controller 204 of the control unit 114. Non-computer-implemented parts of the method may be executed manually or by other components of the system. The method is described by way of example of several steps without any restriction in respect of the steps. That is, the number or the order of steps may be adapted, for example single steps may be excluded and/or added and executed earlier or later than described. When the method proceeds from one step to a next step, the previous step may still be active so that both the one and the next step may be executed in parallel. Accordingly, the control unit may execute two or more method steps in parallel.

The method starts at step S100 and proceeds to step S101. At step S101, the control unit 114 receives from the temperature sensor 116 the current temperature of the inside air in the cabin 108 of the agricultural machine 100.

The method proceeds to step S102 and the control unit 114 determines a target temperature for the inside air in the cabin 108. For comfort reasons, the operator may operate the HVAC-system and set a target temperature, e. g. for heating the inside air of the cabin 108. According to the operation of the HVAC-system by the operator, the target temperature is provided to the control unit 114.

The method proceeds to step S103 and the control unit 114 compares the current temperature of the inside air with the target temperature. The control unit 114 detects a heating demand if the current temperature deviates from the target temperature, for example if the current temperature is lower than the target temperature. Depending on the value of deviation between the current and target temperature, the control unit 114 may detect a higher or lower heating demand. Alternatively, the control unit 114 may detect a heating demand based on a manual input of the operator, for example to override the automatic temperature control of the HVAC-system for a short time. In this case, the heating demand may correspond to a value manually set by the operator.

The method proceeds to step S104 and the control unit 114 determines the overall heating power of the heating device 316 required to fulfil the heating demand and selects the electric heating elements 406a to 406c to be switched on accordingly. By way of example only, the control unit 114 determines a required overall heating power of 7 kW. In response thereof, the control unit 114 would select the electric heating element 406a providing a heating power of 1 kW, the electric heating element 406b providing a heating power of 2 kW and the electric heating element 406c providing a heating power of 4 kW to be switched on. In case of a different value of a required overall heating power, the control unit 114 would adjust the selection of the electric heating elements accordingly.

The method proceeds to step S105 and the control unit 114 determines the switch-on current of the at least one switchable electric heating element 406a to 406c. I. e, according to the exemplarily selected three electric heating elements 406a, 406b and 406c, the control unit 114 determines the switch-on current of the electric heating element 406a, the switch-on current of the electric heating element 406b, the switch-on current of the electric heating element 406c as well as the accumulated switch-on current of the electric heating elements 406a to 406c if switched on at the same time (see FIG. 5A) and the accumulated switch-on current of the electric heating elements 406a to 406c if switched on sequentially (see FIG. 5B). The control unit 114 may determine the switch-on currents based on the characteristic of the switch-on current of each electric heating element 406a to 406c stored in the memory 206 and/or measured by the sensor 404 (as explained above).

Then, the control unit 114 adjusts the power consumption of the controllable electric consumer in dependence of the switch-on current, i. e. the accumulated switch-on current. In case of the electric motor 318 as controllable electric consumer, the control unit 114 controls the inverter 314 to adjust the electric current provided for the electric motor 318 in order to adjust the power consumption of the controllable electric consumer. In case of another controllable electric consumer, the control unit 114 may control the electric current directly. The power consumption is adjusted reciprocally to the characteristic of the accumulated switch-on current of the at least one electric heating element 406a to 406c, here the exemplarily selected electric heating elements 406a, 406b and 406c. I. e., the power consumption of the controllable electric consumer is reduced by the control unit 114 in dependence of an increase of the switch-on current, for example during the phase of initial heating of the PTC resistances, so that the reduction of the power consumption of the controllable electric consumer is sufficient to compensate the increased power consumption of the heating device 316 corresponding with an operating point at the maximum peak (502, 506c) of the accumulated switch-on current. Or, the power consumption of the controllable electric consumer is increased again by the control unit 114 in dependence of a decrease of the switch-on current, for example during the phase of resistance transition of the PTC resistances starting after the maximum peak (502, 506c) of the accumulated switch-on current has been reached by the heating device 316. Then, the reduction of the power consumption of the controllable electric consumer is cut down to a value that is sufficient to compensate the power consumption of the heating device 316 during the phase of stable temperature resulting in an operating point with a constant accumulated (switch-on) current.

Hence, the method proceeds to step S106 to check whether the power consumption of the controllable electric consumer has been reduced sufficiently to switch on at least one of the selected electric heating elements 406a to 406c and compensate their power consumption. If not, the method proceeds to step S107. Otherwise, the method proceeds to step S108.

At step S107, the control unit 114 reduces the electric current provided to the controllable electric consumer, here exemplarily the electric motor 318. Hence, the power consumption of the controllable electric consumer is reduced accordingly. Depending on the operating conditions of the controllable electric consumer and/or the agricultural machine 100, the electric current provided to the controllable electric consumer may be reduced faster or slower. For example, the electric current provided to the controllable electric consumer may be reduced by the control unit 114 reciprocally to the characteristic "sum" 504 as shown in FIG. 5A if a fast reduction is possible. But if the operating conditions does not allow a fast reduction, the electric current provided to the controllable electric consumer may be exemplarily reduced by the control unit 114 reciprocally to a characteristic 510 as shown in FIG. 5B. In this case, the reduction may be more delayed since the maximum peak 506c will be reached at a later time compared to the characteristic "sum" 504 in FIG. 5A reaching the maximum peak 502 at an earlier time. Then, the method steps back to step S106 to check again whether the power consumption of the controllable electric consumer has been reduced sufficiently to switch on at least one of the selected electric heating elements 406a to 406c.

At step S108, the control unit 114 checks which of the selected electric heating elements 406a to 406c can be switched on in dependence of the reduction of the power consumption of the controllable electric consumer. The control unit 114 may use the sensor signal received from the sensor 404 and/or the data stored in the memory 206 to determine when an electric heating element 406a to 406c can be switched on so that the power consumption of the heating element 406a to 406c can be fully compensated by the controllable electric consumer, and to control the switching of the electric heating elements 406a to 406c accordingly. If the reduction of the power consumption of the controllable electric consumer is sufficient, the control unit 114 switches on all of the selected electric heating elements 406a to 406c at the same time as shown in FIG. 5A. If not, the control unit 114 switches on only those of the selected electric heating elements 406a to 406c whose power consumption can be compensated. For example, the control unit 114 may switch on firstly the electric heating element 406a only having the switch-on current with the lowest peak 506a. But the control unit 114 may not switch on the electric heating element 406b unless the accumulated power consumption of the electric heating elements 406a and 406b can be compensated. Analogously, the control unit 114 may not switch on the electric heating element 406c unless the accumulated power consumption of the electric heating elements 406a, 406b and 406c can be compensated. I. e., the control unit 114 controls the switching on of the selected electric heating element 406a to 406c such that the accumulated switch-on currents of the selected electric heating element 406a to 406c as exemplarily represented by the characteristic "sum" 508 in FIG. 5B do not exceed the characteristic 510 according to which the electric current of the controllable electric consumer is reciprocally reduced. After the control unit 114 has switched on the corresponding electric heating elements 406a to 406c, the method proceeds to step S109. Further, the consumption of electric power of each switched on electric heating element 406a to 406c will increase according to its corresponding switch-on current. As can be seen in FIG. 5A, the power consumption of electric heating element 406a will increase according to characteristic 406a, the power consumption of electric heating element 406b will increase according to characteristic 406b and the power consumption of electric heating element 406c will increase according to characteristic 406c. FIG. 5B shows the same power consumptions of each electric heating element 406a to 406c with the difference that the electric heating element 406c is switched on later than the electric heating element 406b which in turn is switched on later than the electric heating element 406a.

At step S109, the control unit 114 checks whether all selected electric heating elements 406a to 406c have been switched on. If not, the method steps back to step S106 to switch on the next selected electric heating element(s) when the power consumption of the controllable electric consumer has been sufficiently reduced. Hence, the control unit 114 will switch on the selected electric heating elements 406a to 406c sequentially. Otherwise, if all selected electric heating elements 406a to 406c have been switched on, the method proceeds to step S110.

At step S110, the control unit 114 checks, whether the increasing accumulated switch-on current of the selected electric heating elements 406a to 406c has reached its maximum peak 502, 506c. The control unit 114 may use the sensor signal received from the sensor 404 and/or the data stored in the memory 206 to determine when the maximum peak 502, 506c has been reached. The control unit 114 may repeat step S110 until the control unit 114 has determined that the maximum peak 502, 506c of the accumulated switch-on current of the selected electric heating elements 406a to 406c has been reached. Then, the accumulated switch-on current will be reduced due to the phase of resistance transition of the PTC resistances until the stable temperature of the heating device 316 has been reached resulting in a constant accumulated electric current of the selected electric heating elements 406a to 406c as indicated by the characteristic "sum" in FIG. 5A or FIG. 5B.

In response thereof, the method proceeds to step S111 and the control unit 114 provides more electric current to the controllable electric consumer so that the controllable electric consumer can be operated with more electric power again. I. e., the control unit 114 cuts down the reduction of the power consumption of the controllable electric consumer to a value that is sufficient to compensate the power consumption of the heating device 316 resulting from the constant accumulated electric current of the selected electric heating elements 406a to 406c. The electric current for the controllable electric consumer may be increased by the control unit 114 reciprocally to the reduction of the accumulated electric current of the selected electric heating elements 406a to 406c as exemplarily indicated by the characteristic "sum" in FIG. 5A or FIG. 5B. If the operating conditions of the controllable electric consumer and/or the agricultural machine 100 do not allow such a fast increase of the electric current, the electric current of the controllable electric consumer may be increased slower, for example reciprocally to the characteristic 512 shown in FIG. 5B. When the control unit 114 has increased the electric current for the controllable electric consumer accordingly, the method proceeds to step S112.

At step S112, the method ends. The method may be restarted again by the control unit 114 at any time.

All references cited herein are incorporated herein in their entireties. If there is a conflict between definitions herein and in an incorporated reference, the definition herein shall control.

**LISTING OF DRAWING ELEMENTS**

| | | | |
|---|---|---|---|
| 100 | agricultural machine | 300 | power management system |
| 102 | front wheel | 302 | power distribution unit |
| 104 | rear wheel | 304 | electric energy storage |
| 106 | hood | 306 | fuel cell |
| 108 | cabin | 308 | DC/DC converter |
| 110 | tank | 310 | electric consumer |
| 112 | enclosure | 312 | electric consumer |
| 114 | control unit | 314 | inverter |
| 116 | temperature sensor | 316 | heating device |
| 202 | I/O interface | 318 | electric motor |
| 204 | controller | 320 | transmission |
| 206 | memory | 322 | retarder |
| 324 | pressure reduction valve | 506b | peak |
| 326 | DC/DC converter | 506c | peak |
| 328 | on-board power supply | 508 | characteristic |
| 330 | DC/DC converter | 510 | characteristic |
| 332 | on-board power supply | 512 | characteristic |
| 334 | on-board charging device | | |
| 336 | charging receptacle | | |
| 338 | refilling receptacle | | |
| 340 | AC compressor | | |
| 342 | air compressor | | |
| 344 | electric energy source | | |
| 402 | power lines | | |
| 404 | sensor | | |
| 406a | electric heating element | | |
| 406b | electric heating element | | |
| 406c | electric heating element | | |
| 408a | switch | | |
| 408b | switch | | |
| 408c | switch | | |
| 502 | peak | | |
| 504 | characteristic | | |
| 506a | peak | | |

## Claims

1. A heating arrangement for an electric agricultural machine (100), comprising:
a heating device (316);
a control unit (114); and
a controllable electric consumer; wherein
the heating device (316) comprises at least one switchable electric heating element (406a to 406c); and
the control unit (114) is configured to
detect a heating demand;
determine a switch-on current of the at least one switchable electric heating element (406a to 406c);
adjust a power consumption of the controllable electric consumer in dependence of the switch-on current;
switch on the at least one switchable electric heating element (406a to 406c).

2. The heating arrangement of claim 1, wherein the control unit (114) is configured to
reduce the power consumption of the controllable electric consumer in dependence of an increase of the switch-on current.

3. The heating arrangement of claim 1 or 2, wherein the control unit (114) is configured to
increase the power consumption of the controllable electric consumer in dependence of a decrease of the switch-on current.

4. The heating arrangement of any one of the preceding claims, wherein the control unit (114) is configured to
adjust the current provided for the controllable electric consumer in order to adjust the power consumption of the controllable electric consumer.

5. The heating arrangement of any one of the preceding claims, wherein
the controllable electric consumer is an electric motor (318).

6. The heating arrangement of any one of the preceding claims, wherein
the at least one switchable electric heating element (406a to 406c) is at least one positive temperature coefficient (PTC) resistance.

7. The heating arrangement of any one of the preceding claims; wherein
the heating device (316) comprises at least one switch (408a to 408c); and
the at least one switchable electric heating element (406a to 406c) is connected with the at least one switch (408a to 408c).

8. The heating arrangement of any one of the preceding claims, comprising
a sensor (404) for measuring a current parameter of an electric current provided for the at least one switchable heating element (406a to 406c); wherein
the control unit (114) is configured to
determine a switch-on current of the at least one switchable electric heating element (406a to 406c) based on the current parameter.

9. The heating arrangement of any one of the preceding claims, wherein
the heating device (316) comprises at least two switchable electric heating elements (406a to 406c); wherein
the heating power of one of the at least two switchable electric heating elements is different to the heating power of another of the at least two switchable electric heating elements.

10. The heating arrangement of claim 9, wherein the at least two switchable electric heating elements (406a to 406c) are arranged in parallel.

11. The heating arrangement of claim 9 or 10, wherein the control unit (114) is configured to
sequentially switch on the at least two switchable electric heating elements (406a to 406c).

12. The heating arrangement of any one of claims 9 to 11, wherein the control unit (114) is configured to
determine the switch-on current of the at least two switchable electric heating elements (406a to 406c) as an accumulated switch-on current of the at least two switchable electric heating elements (406a to 406c).

13. The heating arrangement of any one of the preceding claims, comprising
a temperature sensor (116) for determining a current temperature; wherein
the control unit (114) is configured to
determine a target temperature; and
detect a heating demand if the current temperature deviates from the target temperature.

14. A method for controlling a heating arrangement, comprising:
detecting a heating demand;
determining a switch-on current of at least one switchable electric heating element (406a to 406c);
adjusting a power consumption of the controllable electric consumer in dependence of the switch-on current;
switching on the at least one switchable electric heating element (406a to 406c).
